# EUROPÄISCHE PATENTSCHRIFT

(11) **EP 4 067 048 B1**
(45) Veröffentlichungstag und Bekanntmachung des Hinweises auf die Patenterteilung: **22.11.2023**
(21) Anmeldenummer: 21166247.3
(22) Anmeldetag: 31.03.2021
(51) Int. Cl.: B29C 49/20, B29C 49/50, B29C 49/02, B29L 23/00, B29L 31/00

(54) **VERFAHREN ZUR HERSTELLUNG EINER ANORDNUNG FÜR DEN TRANSPORT VON MEDIEN UND ANORDNUNG**
METHOD FOR PRODUCING AN ASSEMBLY FOR THE TRANSPORT OF MEDIA AND ASSEMBLY
PROCÉDÉ DE FABRICATION D'UN AGENCEMENT POUR LE TRANSPORT DE MILIEUX ET AGENCEMENT

(43) Veröffentlichungstag der Anmeldung: 05.10.2022
(73) Patentinhaber: TI Automotive Technology Center GmbH, 76437 Rastatt (DE)
(72) Erfinder: Boecker, Albert, 76275 Ettlingen (DE); Winter, Matthias, 76437 Rastatt (DE); Schaefer, Thorsten, 76889 Steinfeld (DE); Deibel, Florian, 76547 Sinzheim (DE); Tuzin, Artem, 76297 Stutensee (DE)
(74) Vertreter: Reiser & Partner Patentanwälte mbB

(56) Entgegenhaltungen:
- EP-A1- 3 124 305
- DE-A1-102017 223 207
- US-A- 6 110 412
- US-A1- 2013 049 256

## Beschreibung

Die Erfindung betrifft ein Verfahren zur Herstellung einer Anordnung für den Transport von Medien, umfassend einen als Blasformteil ausgebildeten Grundkörper und zumindest ein Funktionselement.

Anordnungen für den Transport von Medien werden beispielsweise in der Elektromobilität benötigt. Akkumulatoren von Elektrofahrzeugen, insbesondere Lithium-Ionen-Akkumulatoren, weisen eine optimale Leistungsfähigkeit nur innerhalb eines begrenzten Temperaturspektrums auf. Daher kann es je nach Umgebungstemperatur erforderlich sein, die Akkumulatoren zu erwärmen oder zu kühlen. Daher weist die Antriebseinheit eines Elektrofahrzeugs in der Regel einen Temperierkreislauf mit einer Rohranordnung auf, durch welche beispielsweise Temperiermedien zu den Zellen des Akkumulators geleitet werden können, um diese innerhalb des gewünschten Temperaturspektrums zu temperieren.

Des Weiteren kann es erforderlich sein, Komponenten der gesamten Antriebseinheit von Elektrofahrzeugen zu temperieren, insbesondere zu kühlen. Hierzu gehören neben den Akkumulatoren die Leistungselektronik und der Elektromotor. Die Ladeelektronik und die dazugehörigen Steckverbindungen und Leitungen können ebenfalls mittels der Temperiereinrichtung gekühlt werden. Dies ist insbesondere im Zusammenhang mit Schnellladevorgängen relevant.

Neben dem Einsatz in einer Antriebseinheit ergibt sich ein weiteres Einsatzgebiet im Zusammenhang mit der übrigen Fahrzeugelektronik, hier insbesondere von Sensoren und Bordcomputern. Ist ein Fahrzeug zum autonomen Fahren ausgerüstet, werden leistungsfähige Sensoren und leistungsfähige Rechner benötigt, wobei die Systeme zumeist redundant vorhanden sind. Dadurch, dass der Bauraum in einem Fahrzeug beschränkt ist, ergeben sich auch bei diesen Systemen besondere Anforderungen an eine Temperiereinrichtung zur Temperierung dieser Komponenten.

Temperiermedien kommen ferner in Klimaanlagen zum Einsatz. Klimaanlagen, insbesondere mobile Klimaanlagen, umfassen eine Rohranordnung, welche den Transport von Temperiermedien zwischen den einzelnen Aggregaten der Klimaanlage ermöglicht. Bei mobilen Klimaanlagen, beispielsweise bei Klimaanlagen für die Klimatisierung von Innenräumen von Fahrzeugen, ist die Rohranordnung ein vergleichsweise komplexes Gebilde. Hinzu kommt, dass weitere Komponenten der Anordnung, beispielsweise Funktionselemente, wie Pumpen, platzsparend in die Anordnung integriert werden sollen. Durch die Integration von Funktionselementen in die Anordnung ergibt sich darüber hinaus der Vorteil, dass der Montageaufwand der Anordnung geringer ist. Dabei muss aber insbesondere im Zuge der Montage der Anordnung sichergestellt werden, dass das Funktionselement verliersicher an der Anordnung gehalten ist.

DE 10 2017 223 207 A1 beschreibt ein Verfahren zur Herstellung einer Schlauchleitung, wobei die Schlauchleitung eine Hauptleitung und ein Abgangsrohr umfasst. Bei dem Verfahren wird das vorgefertigte Abgangsrohr und Leitungsmaterial in einem durch ein erstes und ein zweites Formwerkzeugteil gebildeten Formraum angeordnet, wobei das Abgangsrohr Dichtmaterial umfasst. Das Leitungsmaterial bildet während des Blasformens die Hauptleitung aus, so dass eine fluiddichte Verbindung zwischen dem Abgangsrohr und der Hauptleitung erzeugt wird.

US 6,110,412 zeigt ein Verfahren zur Herstellung eines rohrförmigen Luftkanals mit einem integral geformten Seitenkanal zur Anwendung in Fahrzeugen. Die Herstellung erfolgt im Blasformverfahren.

US 2013/0049256 A1 beschreibt eine Verbindungsstruktur zwischen einem Druckbehälter und einem Mündungselement sowie ein Verfahren zur Herstellung der Verbindungsstruktur. Die Herstellung erfolgt im Blasformverfahren.

EP 3 124 305 A1 zeigt einen Kraftstofftrank mit einer aus einem Kunststoffmaterial hergestellten Wand, wobei der Kraftstofftank ein an der Wand befestigtes Bauteil umfasst. Die Herstellung erfolgt im Blasformverfahren.

Der Erfindung liegt die Aufgabe zugrunde, die Herstellung mit einem als Blasformteil ausgebildeten Grundkörper samt in den Grundkörper integriertem Funktionselement kostengünstig zu ermöglichen.

Diese Aufgabe wird mit den Merkmalen von Anspruch 1 gelöst. Auf vorteilhafte Ausgestaltungen nehmen die Unteransprüche Bezug.

Bei dem erfindungsgemäßen Verfahren zur Herstellung einer Anordnung für den Transport von Medien, umfassend einen als Blasformteil ausgebildeten Grundkörper und zumindest ein Funktionselement, werden ein aus polymerem Material bestehender Vorformling und zumindest ein Funktionselement bereitgestellt und in einer Blasform angeordnet, wobei aus dem Vorformling der Grundkörper ausgeformt ist, wobei sich der Vorformling während des Ausformens an das Funktionselement anlegt, wobei die Blasform ein erstes Formelement und ein zweites Formelement aufweist, wobei sich zwischen dem ersten Formelement und dem zweiten Formelement aus dem Vorformling der Grundkörper ausbildet, wobei sich das erste Formelement und das zweite Formelement so an das Funktionselement anlegen, dass während des Blasformens im Bereich des Funktionselements aus dem Vorformling entstehendes überschüssiges Material entfernbar ist.

Nach Abschluss des Blasformens ist der einstückig ausgebildete Grundkörper vorzugsweise formschlüssig an das Funktionselement angebunden. Der Vorformling, aus dem der Grundkörper hergestellt wird, kann dabei als Schlauch ausgebildet sein, welcher zum Ausformen zwischen den beiden Formelementen angeordnet ist. Dabei gelangt der Vorformling auch zur Anlage an dem Funktionselement, welches in der Blasform angeordnet ist.

Besonders bevorzugt ist dabei, dass sich zwischen dem Grundkörper und dem Funktionselement eine strömungsleitende Verbindung ausbildet. Dementsprechend kann in dem Grundkörper zumindest ein Strömungskanal ausgebildet sein, welcher in einen in das Funktionselement eingebrachten weiteren Strömungskanal mündet. Der Übergang zwischen Grundkörper und Funktionselement, beziehungsweise der Zwischenbereich zwischen Grundkörper und Funktionselement soll dabei dauerhaft dichtend sein.

Zur Herstellung des Grundkörpers legen sich die beiden Formelemente der Blasform zumindest abschnittsweise an das Funktionselement an. Beim Ausformen des Grundkörpers aus dem Vorformling soll ein definierter Übergang zwischen Grundkörper und Funktionselement entstehen. Bei dem erfindungsgemäßen Verfahren liegen die Formelemente dabei während des Blasformens so an dem Funktionselement an, dass während des Blasformens im Bereich des Funktionselements entstehendes überschüssiges Material entfernbar ist. Dazu legen sich das erste Formelement und das zweite Formelement vorzugsweise derart aneinander und an das Funktionselement an, dass überschüssiges Material von dem Grundkörper abgetrennt wird

Vorzugsweise drücken die beiden Formelemente nach dem Schließen den Vorformling so ab, dass im Bereich des Funktionselements definierte Bereiche entstehen, an welchen sich das überschüssige Material von dem Grundkörper abtrennt. Überschüssiges Material, auch als Butzen bezeichnet, ist solches Material des Vorformlings, welches nach dem Schließen der Formelemente außerhalb der den Grundkörper bildenden Bereiche der Formelemente angeordnet ist. Berühren sich die beiden Formelemente anliegend, entsteht in dem Berührungsbereich eine Naht und dort entstehendes überschüssiges Material fällt nach dem Entformen ab oder kann zumindest einfach entfernt werden. Soll jedoch ein Funktionselement direkt an den Grundkörper angeformt werden, wird die Naht unterbrochen und die Formelemente berühren sich in diesen Abschnitten nicht. Die Naht verläuft abschnittsweise dann entlang des Funktionselements. Damit auch dort entstehendes überschüssiges Material einfach entfernbar ist, legen sich die beiden Formelemente während des Blasformens so an das Funktionselement an, dass auch in diesem Bereich das überschüssige Material von dem Grundkörper abgetrennt wird. Das überschüssige Material fällt dann entweder direkt nach dem Entformen ab oder kann mit einfachen Mitteln, beispielsweise durch Abreißen oder Abschneiden, entfernt werden.

Vorzugsweise ist das Funktionselement aus polymerem Material ausgebildet. Als Material kommen vorzugsweise Kunststoffe wie thermoplastische Polymere oder thermoplastische Elastomere zum Einsatz. Dabei ist das Material des Funktionselements so ausgewählt, dass das Funktionselement während des Blasformens formstabil ist. Dementsprechend liegt die Glasübergangstemperatur des für das Funktionselement gewählten Kunststoffs oberhalb der für das Blasformen des Vorformlings erforderlichen Temperatur. Alternativ ist denkbar, das Funktionselement aus metallischem Werkstoff, aus keramischem Werkstoff oder aus Glas auszubilden.

Das erste Formelement und das zweite Formelement legen sich während des Blasformens erfindungsgemäß mit elastischer Vorspannung an das Funktionselement an. Dabei liegen die beiden Formelemente dicht an dem Funktionselement an, ohne dabei eine bleibende Verformung in das Funktionselement einzubringen.

Das erste Formelement und das zweite Formelement können mit Abpresskanten ausgerüstet sein, welche während des Blasformens linienförmig und mit elastischer Vorspannung an dem Funktionselement anliegen. Dadurch entstehen besonders definierte Bereiche, welche ein besonders einfaches Entfernen nach dem Blasformen entstehender überschüssiger Bereiche ermöglichen. Die Abpresskanten können in Form von Rippen ausgebildet sein. Je nach Ausgestaltung können die Abpresskanten auch Schneidkanten bilden, welche eine Trennung des Grundkörpers von dem überschüssigen Material bewirken.

Vorzugsweise bildet die Anordnung eine Verteilstruktur für Temperiermedien.

Das Funktionselement kann als Anschlussstutzen ausgebildet sein und beispielsweise einen Schlauchanschluss bilden. Der Schlauchanschluss ermöglicht ein einfaches Verbinden der Anordnung mit einem oder mehreren Schläuchen, durch welche ein Medium in den Grundkörper geleitet werden kann. Das Funktionselement kann aber auch als Adapter, Ventil, Pumpe, Sensor oder als Teil der vorgenannten Elemente ausgebildet sein.

Die Anordnung eignet sich insbesondere für den Einsatz in Fahrzeuge, besonders bevorzugt in Elektrofahrzeugen. Durch das erfindungsgemäße Herstellungsverfahren ist die Anordnung kompakt und weist integrierte Funktionselemente auf. Dadurch eignet sich die Anordnung für den Einsatz als Verteilstruktur für Temperiermedien in Elektrofahrzeugen.

Einige Ausgestaltungen der erfindungsgemäßen Anordnung und des erfindungsgemäßen Verfahrens werden nachfolgend anhand der Figuren näher erläutert. Diese zeigen, jeweils schematisch:
Fig. 1 eine Anordnung für den Transport von Medien;
Fig. 2 eine Blasform.

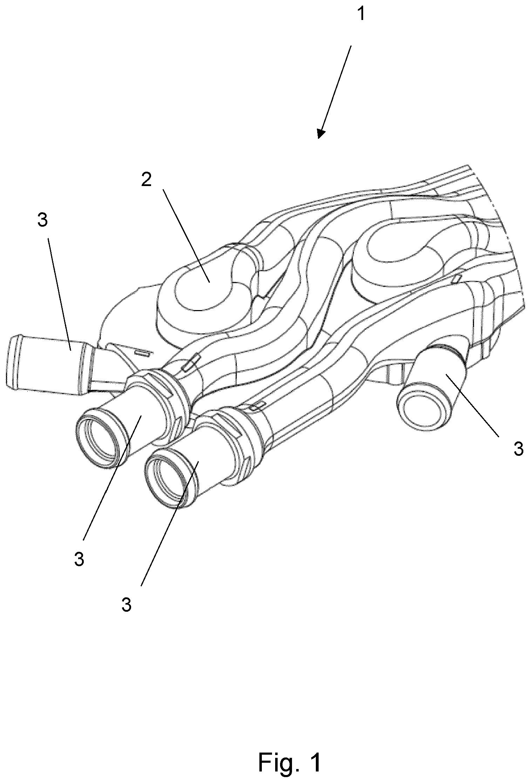

Figur 1 zeigt eine Anordnung 1 für den Transport von Medien. Vorliegend bildet die Anordnung 1 eine Verteilstruktur für Temperiermedien, wobei die Anordnung 1 in einem Temperierkreislauf eines Elektrofahrzeugs zum Einsatz gelangt. Über die Anordnung 1 kann Temperiermedium verteilt und zu den zu temperierenden Einrichtungen, beispielsweise den Akkumulatoren, den Elektromotoren oder der Leistungselektronik, geleitet werden.

Die Anordnung 1 umfasst einen Grundkörper 2, welcher als Blasformteil ausgebildet ist, sowie mehrere Funktionselemente 3, welche verliersicher mit dem Grundkörper 2 verbunden sind. Vorliegend sind die Funktionselemente 3 als Anschlussstutzen ausgebildet und dienen der Aufnahme von Schläuchen für den Transport von Temperiermedium.

Der Grundkörper 2 ist ebenso wie die Funktionselemente 3 aus polymerem Material ausgebildet. Die Funktionselemente 3 sind im Spritzgießverfahren hergestellt, wobei der Kunststoff für die Funktionselemente 3 so ausgewählt ist, dass dessen Glasübergangstemperatur oberhalb der für die Formgebung des Grundkörpers 2 im Blasformverfahren erforderlichen Temperatur liegt.

Dadurch, dass die Funktionselemente 3 bereits in dem Blasformvorgang in der der Blasform 4 angeordnet sind, ist der Grundkörper 2 direkt, formschlüssig und verliersicher an die Funktionselemente 3 angeformt. Dadurch bildet die Anordnung 1 eine einfach montierbare Einheit.

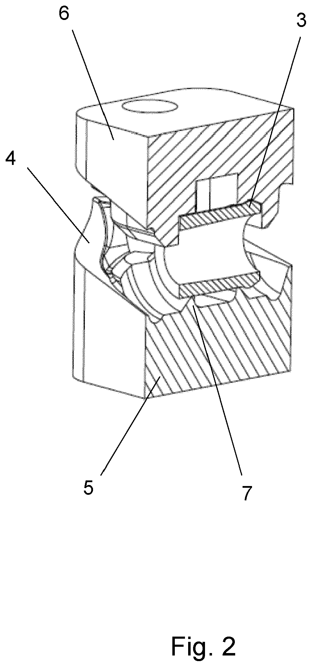

Figur 2 zeigt eine Blasform 4 zur Herstellung der Anordnung 1. Die Blasform 4 umfasst ein erstes Formelement 5 und ein zweites Formelement 6, wobei sich zwischen dem ersten Formelement 5 und dem zweiten Formelement 6 während des Blasformens aus dem Vorformling der Grundkörper 2 ausbildet. Dabei wird der Vorformling im Übergang zwischen dem ersten Formelement 5 und dem zweiten Formelement 6 abgedrückt, so dass entlang einer Naht überschüssiges Material entsteht, welches nach dem Formgebungsprozess entfernt wird.

Im Bereich der Funktionselemente 3 legen sich das erste Formelement 5 und das zweite Formelement 6 so an die Funktionselemente 3 an, dass während des Blasformens im Bereich der Funktionselemente 3 entstehendes überschüssiges Material entfernbar ist. Dabei liegen das erste Formelement 5 und das zweite Formelement 6 während des Blasformens mit elastischer Vorspannung an dem Funktionselement 3 an. Die Vorspannung ist dabei so gewählt, dass keine Verformung in die Funktionselemente 3 eingebracht, welche mit einer Funktionseinschränkung einhergehen könnte.

Das erste Formelement 5 und das zweite Formelement 6 sind in den den Funktionselementen 3 zugeordneten Bereichen mit Abpresskanten 7 ausgerüstet, welche während des Blasformens linienförmig und mit elastischer Vorspannung an den Funktionselementen 3 anliegen. Dadurch bildet sich auch im Bereich zwischen Grundkörper 2 und Funktionselementen 3 eine Art Naht aus, an welcher überschüssiges Material besonders einfach entfernbar ist. Überschüssiges Material kann nach dem Blasformen abgeschnitten oder abgerissen werden. Vorzugsweise wird überschüssiges Material abgerissen, wodurch sich das Herstellungsverfahren beschleunigt. Je nach Ausgestaltung können die Abpresskanten 7 auch Schneidkanten bilden, welche eine definierte Trennung des Grundkörpers 2 von dem überschüssigen Material bewirken.

## Patentansprüche

1. Verfahren zur Herstellung einer Anordnung (1) für den Transport von Medien, umfassend einen als Blasformteil ausgebildeten Grundkörper (2) und zumindest ein Funktionselement (3), bei welchem ein aus polymerem Material bestehender Vorformling und zumindest ein Funktionselement (3) bereitgestellt und in einer Blasform (4) angeordnet werden, wobei aus dem Vorformling der Grundkörper (2) ausgeformt wird, wobei sich der Vorformling während des Ausformens an das Funktionselement (3) anlegt, wobei die Blasform (4) ein erstes Formelement (5) und ein zweites Formelement (6) aufweist, wobei sich zwischen dem ersten Formelement (5) und dem zweiten Formelement (6) aus dem Vorformling der Grundkörper (2) ausbildet, wobei das erste Formelement (5) und das zweite Formelement (6) während des Blasformens mit elastischer Vorspannung an dem Funktionselement (3) anliegen, wobei sich das erste Formelement (5) und das zweite Formelement (6) so an das Funktionselement (3) anlegen, dass während des Blasformens im Bereich des Funktionselements (3) entstehendes überschüssiges Material entfernbar ist.

2. Verfahren nach Anspruch 1, **dadurch gekennzeichnet, dass** sich das erste Formelement (5) und das zweite Formelement (6) derart aneinander und an das Funktionselement (3) anlegen, dass das überschüssige Material von dem Grundkörper (2) entfernbar ist.

3. Verfahren nach Anspruch 1 oder 2, **dadurch gekennzeichnet, dass** das Funktionselement (3) aus polymerem Material ausgebildet ist.

4. Verfahren nach einem der Ansprüche 1 bis 3, **dadurch gekennzeichnet, dass** das erste Formelement (5) und das zweite Formelement (6) mit Abpresskanten (7) ausgerüstet sind, welche während des Blasformens linienförmig und mit elastischer Vorspannung an dem Funktionselement (3) anliegen.

5. Verfahren nach einem der Ansprüche 1 bis 4, **dadurch gekennzeichnet, dass** die Anordnung (1) eine Verteilstruktur für Temperiermedien bildet.

6. Verfahren nach einem der Ansprüche 1 bis 5, **dadurch gekennzeichnet, dass** das Funktionselement (3) als Anschlussstutzen ausgebildet ist.

7. Verfahren nach Anspruch 6, **dadurch gekennzeichnet, dass** der Anschlussstutzen einen Schlauchanschluss bildet.

## Claims

1. A method for manufacturing an arrangement (1) for the transport of media, comprising a base body (2) formed as a blow-molded part and at least one functional element (3), in which a preform consisting of polymeric material and at least one functional element (3) are provided and arranged in a blow mold (4), wherein the base body (2) is formed from the preform, wherein the preform bears against the functional element (3) during forming, wherein the blow mold (4) has a first mold element (5) and a second mold element (6), wherein the base body (2) is formed from the preform between the first mold element (5) and the second mold element (6), wherein the first mold element (5) and the second mold element (6) bear with elastic pretension against the functional element (3) during blow molding, wherein the first mold element (5) and the second mold element (6) bear against the functional element (3) in such a way that excess material produced from the preform in the area of the functional element (3) during blow molding can be removed.

2. The method according to claim 1, **characterized in that** the first mold element (5) and the second mold element (6) bear against each other and against the functional element (3) in such a way that the excess material can be removed from the base body (2).

3. The method according to claim 1 or 2, **characterized in that** the functional element (3) is formed from polymeric material.

4. The method according to any one of claims 1 to 3, **characterized in that** the first mold element (5) and the second mold element (6) are equipped with press-off edges (7) which, during blow molding, bear linearly and with elastic pretension against the functional element (3).

5. The method according to any of claims 1 to 4, **characterized in that** the arrangement (1) forms a distribution structure for temperature control media.

6. The method according to any of claims 1 to 5, **characterized in that** the functional element (3) is formed as a connecting piece.

7. The method according to claim 6, **characterized in that** the connection piece forms a hose connection.

## Revendications

1. Procédé de fabrication d'un agencement (1) pour le transport de fluides, comprenant un corps de base (2) formé comme une pièce moulée par soufflage et au moins un élément fonctionnel (3), dans lequel une préforme constituée d'une matière polymère et au moins un élément fonctionnel (3) sont fournis et agencés dans un moule de soufflage (4), dans lequel le corps de base (2) est formé à partir de la préforme, dans lequel la préforme s'appuie contre l'élément fonctionnel (3) pendant le formage, dans lequel le moule de soufflage (4) comporte un premier élément de moule (5) et un second élément de moule (6), dans lequel le corps de base (2) est formé à partir de la préforme entre le premier élément de moule (5) et le second élément de moule (6), dans lequel le premier élément de moule (5) et le second élément de moule (6) sont appuyés contre l'élément fonctionnel (3) avec une précontrainte élastique pendant le moulage par soufflage, dans lequel le premier élément de moule (5) et le second élément de moule (6) s'appuient contre l'élément fonctionnel (3) de telle manière que la matière en excès surgissant dans la zone de l'élément fonctionnel (3) peut être retirée pendant le moulage par soufflage.

2. Procédé selon la revendication 1, **caractérisé en ce que** le premier élément de moule (5) et le second élément de moule (6) sont appuyés l'un contre l'autre et contre l'élément fonctionnel (3) de telle manière que la matière en excès peut être retirée du corps de base (2).

3. Procédé selon la revendication 1 ou 2, **caractérisé en ce que** l'élément fonctionnel (3) est formé à partir d'une matière polymère.

4. Procédé selon l'une quelconque des revendications 1 à 3, **caractérisé en ce que** le premier élément de moule (5) et le second élément de moule (6) sont équipés des bords coupants (7) qui s'appuient linéairement contre l'élément fonctionnel (3) et avec une précontrainte élastique pendant le moulage par soufflage.

5. Procédé selon l'une quelconque des revendications 1 à 4, **caractérisé en ce que** l'agencement (1) forme une structure de distribution pour des fluides d'équilibrage de température.

6. Procédé selon l'une quelconque des revendications 1 à 5, **caractérisé en ce que** l'élément fonctionnel (3) est réalisé sous la forme d'un embout de raccordement.

7. Procédé selon la revendication 6, **caractérisé en ce que** l'embout de raccordement forme un raccord de tuyau.
